# EUROPEAN PATENT APPLICATION

(11) **EP 1 850 338 A2**
(43) Date of publication of application: **31.10.2007**
(21) Application number: 06117081.7
(22) Date of filing: 12.07.2006
(51) Int. Cl.: G11B 7/24

(54) **Optical recording medium and fabrication method thereof**

(30) Priority: 28.04.2006 JP 2006126811
(71) Applicant: Fujitsu Ltd., Kawasaki-shi, Kanagawa 211-8588 (JP)
(72) Inventor: Hosokawa, Tetsuo FUJITSU LIMITED, Kawasaki-shi Kanagawa 211-8588 (JP); Okamuro, Akio FUJITSU LIMITED, Kawasaki-shi Kanagawa 211-8588 (JP)
(74) Representative: Seeger, Wolfgang

(57) **Abstract**

An optical recording medium includes a substrate having phase pits, a reflective layer that reflects a light beam emitted to the substrate and the phase pits, and a reflectivity reducing layer that reduces the reflectivity of the reflective layer on a light-incident side of the reflective layer. A dielectric layer is formed as the reflectivity reducing layer so that a refractive index varies. In another variation, a metal layer is used as the reflectivity reducing layer, which is formed of a metal film with a higher refractive index than that of the reflective layer.

## Description

### BACKGROUND OF THE INVENTION

### 1. Field of the Invention

The present invention relates to an optical recording medium and a fabrication method thereof that allows reflectivity of the optical recording medium to be set to any value without increasing transmittance of the optical recording medium.

### 2. Description of the Related Art

Optical disk recording media (hereinafter, "optical recording medium") such as compact disk recordable (CD-R) and digital versatile disk recordable (DVD-R) have been widely used. Data on an optical recording medium is often reproduced by a reproducer other than a device that has recorded data. Therefore, reproducers are required to correctly reproduce data on any optical recording medium, provided they conform to the same standard.

However, due to variations in the quality of recording devices and recording conditions, as well as variations in the quality of optical recording media, there are instances when a reproducer fails to reproduce data recorded on an optical recording medium. For example, problems such as distortion in reproduction waveform and an increase in jitter (signal fluctuations) can lead to a playback error.

There have been attempts at regulating the quality of recording devices to prevent failure of data playback. Specifically, it is a general practice to design a recording device using a test optical recording medium (hereinafter, "test medium") and test the quality of the recording device.

If CD-R or DVD-R is used for quality testing, it is difficult to equalize the quality standards of recording devices because the testing conditions cannot be set at a constant level. Therefore, a test medium fabricated exclusively for testing has been used for quality testing. For example, Japanese Patent No. 3674545 and Japanese Patent Laid-Open Publication No. 2002-334481 disclose a fabrication method of a test medium having an uneven recording surface or a deformed substrate such as a warped substrate.

However, in the quality testing conducted using the conventional test medium disclosed in Japanese Patent No. 3674545 and Japanese Patent Laid-Open Publication No. 2002-334481, distortion of the reproduction waveform caused by variations in the recording conditions cannot be reproduced. In particular, the reflectivity of a test medium impacts the distortion of the reproduction waveform, and therefore, it is desirable to conduct quality testing using a test medium with reflectivity that can be set to any value. In the conventional test medium, however, the reflectivity cannot be set arbitrarily.

Incidentally, to fabricate a test medium in which reflectivity is set to an arbitrary value, care is required so that transmittance is not to be too high. If the transmittance is too high, an optical position sensor that detects the position of the optical recording medium detects the position of the optical recording medium inaccurately.

Thus, there is a need of a technology capable of realizing an optical recording medium that allows reflectivity to be set to any value without increasing transmittance.

### SUMMARY OF THE INVENTION

It is an object of the present invention to at least partially solve the problems in the conventional technology.

According to an aspect of the present invention, an optical recording medium includes a substrate that includes phase pits, a reflective layer that reflects a light beam emitted to the substrate and the phase pits, and a reflectivity reducing layer that reduces reflectivity of the reflective layer, the reflectivity reducing layer being provided on a light-incident side of the reflective layer.

According to another aspect of the present invention, a fabrication method of an optical recording medium includes forming a substrate that includes phase pits, forming a reflective layer that reflects a light beam emitted to the substrate and the phase pits, and forming a reflectivity reducing layer that reduces reflectivity of the reflective layer on a light-incident side of the reflective layer.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a side view of an optical recording medium according to an embodiment of the present invention;
Fig. 2 is a side view of the optical recording medium including a dielectric layer as a reflectivity reducing layer shown in Fig. 1;
Fig. 3 is a graph of a relation between a thickness of the dielectric layer, a thickness of a reflective layer, and reflectivity in the optical recording medium shown in Fig. 2;
Fig. 4 is a graph of a relation between the thickness of the dielectric layer, the thickness of the reflective layer, and transmittance in the optical recording medium;
Fig. 5 is a graph of a relation between a flow rate of nitrogen (N₂) gas used when the dielectric layer is formed and a refractive index of the dielectric layer;
Fig. 6 is a graph of a relation between the refractive index of the dielectric layer, the thickness of the dielectric layer, and the reflectivity in the optical recording medium shown in Fig. 2;
Fig. 7 is a side view of an optical recording medium including a metal layer as the reflectivity reducing layer;
Fig. 8 is a graph of a relation between a thickness of the metal layer, a thickness of a reflective layer, and reflectivity in the optical recording medium shown in Fig. 7;
Fig. 9 is a graph of a relation between the thickness of the metal layer, the thickness of the reflective layer, and transmittance in the optical recording medium shown in Fig. 7;
Fig. 10 is a side view of a conventional optical recording medium in which the reflective layer is composed of aluminum (Al);
Fig. 11 is a graph of a relation between a thickness of a reflective layer and reflectivity in the optical recording medium shown in Fig. 10;
Fig. 12 is a graph of a relation between the thickness of the reflective layer and transmittance in the optical recording medium shown in Fig. 10;
Fig. 13 is a side view of a conventional optical recording medium in which the reflective layer is composed of silver (Ag);
Fig. 14 is a graph of a relation between a thickness of a reflective layer and reflectivity in the optical recording medium shown in Fig. 13;
Fig. 15 is a graph of a relation between the thickness of the reflective layer and transmittance in the optical recording medium shown in Fig. 13;
Fig. 16 is a graph of a relation between a power and an exposure time during an exposure process in stamper fabrication; and
Fig. 17 is an example of an orthogonal table.

### DETAILED DESCRIPTION OF THE PREFERRED EMBODIMENTS

Exemplary embodiments of the present invention are explained with reference to the accompanying drawings. While, in the embodiments described below, the optical recording medium is used as a test medium, the optical recording medium according to the embodiments is available for commercial use.

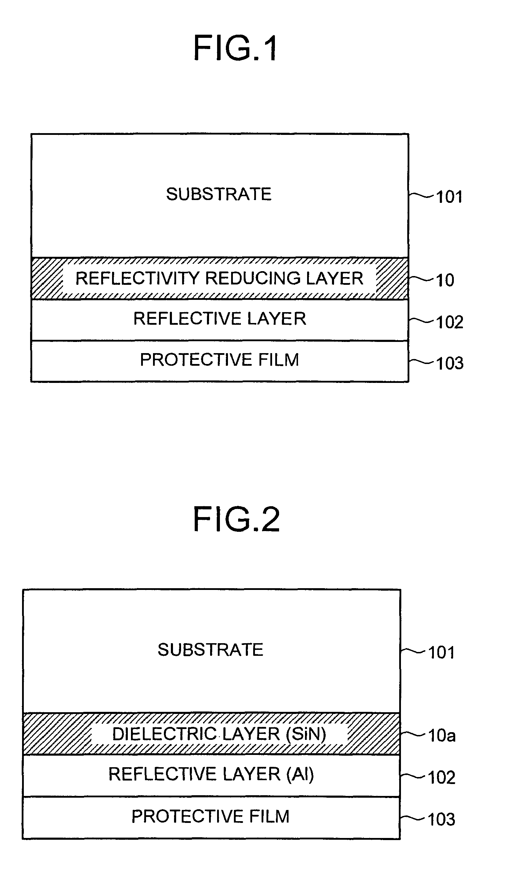

Fig. 1 is a side view of an optical recording medium according to an embodiment of the present invention. The optical recording medium includes a substrate 101 having phase pits thereon, a reflective layer 102, a protective film 103, and a reflectivity reducing layer 10 between the substrate 101 and the reflective layer 102. With the reflectivity reducing layer 10, the reflectivity can be set to any value without increasing the transmittance of the optical recording medium. A light beam can be incident on the reflective layer 102 either from the substrate 101 or from the protective film 103.

The reflective layer 102 is a metal film such as aluminum (Al). The reflectivity reducing layer 10 is a dielectric film of silicon nitride (SiN), etc. or a metal film that has a higher refractive index than the metal film used as the reflective layer 102.

In a conventional manner, generally, the thickness of the reflective layer 102 is adjusted to set the reflectivity of the optical recording medium to an arbitrary value. However, it is not easy to adjust the thickness of the reflective layer 102. As the reflective layer 102 is made thinner to reduce the reflectivity, a slight change in the thickness can cause a sudden fall in the reflectivity.

The degree of the reflectivity depends on the thickness of the reflective layer 102, and therefore, it is necessary to form the reflective layer 102 in a multi-level manner and to strictly control the thickness at each level so that the reflectivity can be set to any value. However, the thickness of the reflective layer 102 is not proportional to the reflectivity. Hence, it is difficult to strictly control the thickness in the process of forming the reflective layer 102.

If the reflectivity is reduced by decreasing the thickness of the reflective layer 102, the transmittance increases. In an in-vehicle optical disk playback device, for example, the optical position sensor generally detects the position of the optical recording medium when it is being delivered to a spindle motor section. If the optical recording medium has high transmittance, the optical position sensor detects the position of the optical recording medium inaccurately.

Therefore, in the optical recording medium according to the embodiment, the reflectivity reducing layer 10 is provided in addition to the reflective layer 102. By using the variation in refractive index according to the material of the reflectivity reducing layer 10, the reflectivity of the entire optical recording medium is adjusted. Thus, an optical recording medium with arbitrary reflectivity can be obtained without having to strictly control the thickness of the reflective layer 102 and the reflectivity reducing layer 10.

Further, the thickness is selected for the reflectivity reducing layer 10 such that there is only a mild change in the reflectivity due to a variation in the thickness. Consequently, even if there is a variation in the thickness in the fabrication process, a reflectivity standard required for test medium can be maintained constant.

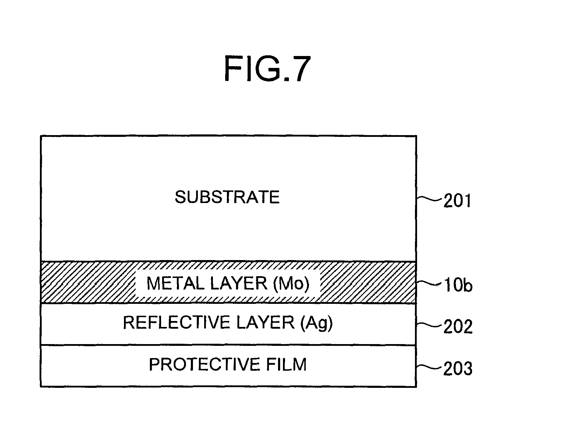

In the following, the optical recording medium as a test medium in which a dielectric layer functions is used as the reflectivity reducing layer 10 is described with reference to Figs. 2 to 6. A test medium in which a metal layer is used as the reflectivity reducing layer 10 is described with reference to Figs. 7 to 9. In the test medium having a dielectric layer as the reflectivity reducing layer 10, reproduction is performed in a wavelength range of 650 nm to 830 nm, i.e., wavelengths for CD-R and DVD-R. In the test medium having a metal layer as the reflectivity reducing layer 10, reproduction is performed at a wavelength of 405 nm, i.e., wavelength for Blu-ray Disk.

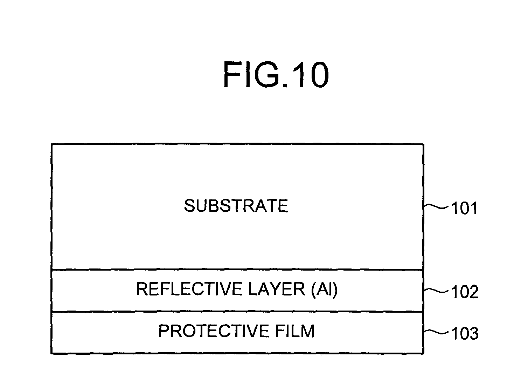

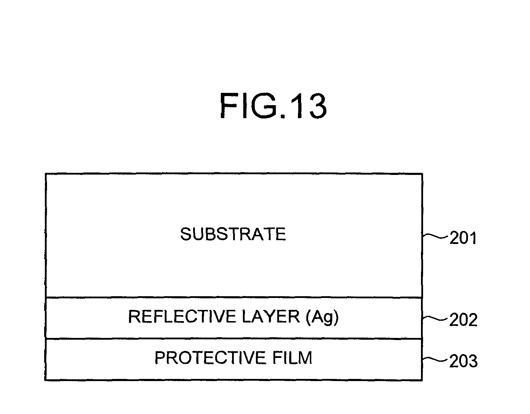

Conventional technology corresponding to the optical recording medium explained with reference to Figs. 2 6 is explained with reference to Figs. 10 to 12 as required. Similarly, conventional technology corresponding to the optical recording medium explained with reference to Figs. 7 to s 9 is explained with reference to Figs. 13 to 15.

The optical recording medium in which a silicon nitride (SiN) dielectric layer is used as the reflectivity reducing layer 10 is explained first. Fig. 2 is a side view of the optical recording medium in which a dielectric layer 10a is provided as the reflectivity reducing layer 10. In the optical recording medium, the dielectric layer 10a of silicon nitride (SiN) is formed by sputtering on the substrate 101 with the phase pits formed thereon. The reflective layer 102 of aluminum (Al) is formed on the dielectric layer 10a. The protective film 103 of protective resin coating is formed on the reflective layer 102.

A Specific procedure involved in forming the dielectric layer 10a of silicon nitride (SiN) on the substrate 101 is explained next. The substrate 101 having the phase pits is placed in a vacuum chamber, and a mixture of argon (Ar) gas and nitrogen (N₂) gas is introduced into the vacuum chamber. The refractive index of the silicon nitride (SiN) layer (dielectric layer 10a) can be varied by changing the flow rate of nitrogen (N₂) gas. The thickness of the silicon nitride (SiN) layer (dielectric layer 10a) can be varied by changing duration of film formation.

A conventional optical recording medium (which does not have a reflectivity reducing layer) is explained next with reference to Figs. 10 to 12 to clarify the feature of the optical recording medium shown in Fig. 2. Fig. 10 is a side view of the conventional optical recording medium having the reflective layer 102 of aluminum (Al).

In the optical recording medium, the reflective layer 102 of aluminum (A1) is formed on the substrate 101 with phase pits formed thereon, and the protective film 103 of protective resin coating is formed on the reflective layer 102. The reflective layer 102 is formed by sputtering. The protective film 103 is formed by spin coating of a UV-cured resin and then hardening the resin by UV radiation.

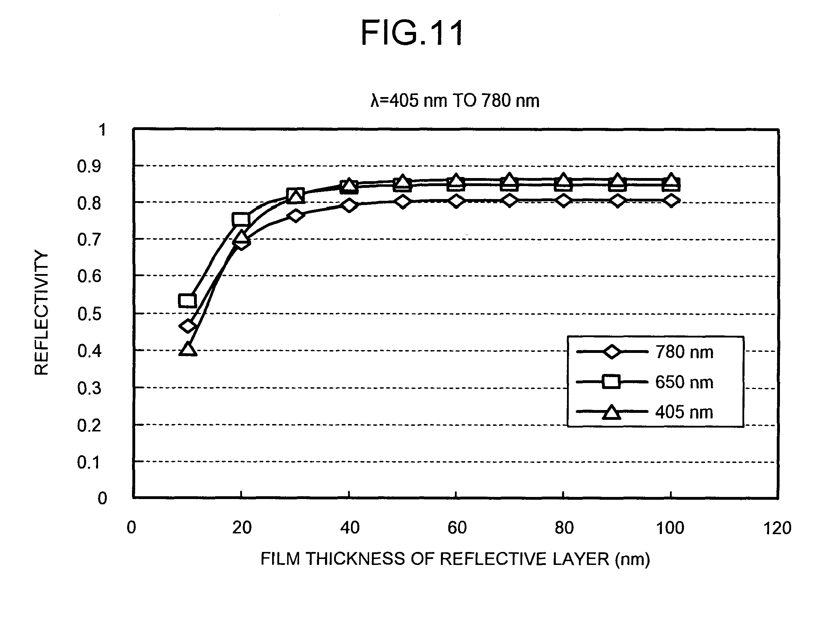

It is necessary to change the thickness of the reflective layer 102 so that the optical recording medium of Fig. 10 can reproduce the variation in the reflectivity of CD-R, DVD-R or the like. Fig. 11 is a graph of a relation between the thickness of the reflective layer 102 and the reflectivity in the optical recording medium shown in Fig. 10.

It is preferable to set the reflectivity between 60% and 80% to reproduce the variation in the reflectivity of CD-R or DVD-R. As shown in Fig. 11, if the thickness of the reflective layer 102 is set between 18 nm and 30 nm, the reflectivity can be set between 60% and 80%. However, in this range of thickness, the reflectivity changes drastically according to the variation in the thickness. Consequently, the reflectivity tends to vary if there is any manufacturing variation, or any change in the thickness or the film quality due to degradation. Specifically, although the thickness generally varies around ±10% due to manufacturing variation, if the thickness of the reflective layer 102 varies by ±10%, the reflectivity varies to the extent of ±6%.

Thus, in an optical recording medium having a predetermined reflectivity fabricated as a test medium, if predetermined reflectivity is sought by changing the thickness of the reflective layer 102, the variation in the thickness makes it difficult to obtain the desired reflectivity. Especially, if the reflectivity is reduced by reducing the thickness of the reflective layer 102, the variation in the reflectivity increases. As a result, the precision in setting the reflectivity required of a test medium cannot be achieved.

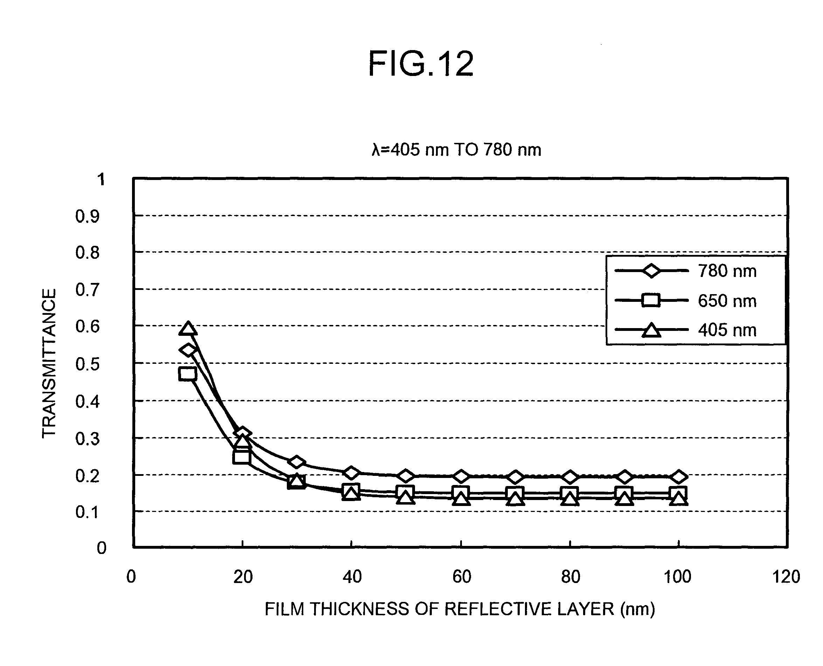

If the thickness of the reflective layer 102 is reduced, there is a danger that the transmittance increases. Fig. 12 is a graph of a relation between the thickness of the reflective layer 102 and the transmittance in the optical recording medium shown in Fig. 10. As can be seen in Fig. 10, when the thickness of the reflective layer 102 reduces, there is a sudden rise in the transmittance.

On the other hand, in the optical recording medium that includes the dielectric layer 10a shown in Fig. 2, the desired reflectivity can be obtained by changing the refractive index of the dielectric layer 10a. As a result, the reflectivity can be stably set to any value without increasing the transmittance of the optical recording medium. The optical recording medium shown in Fig. 2 is described next in further detail.

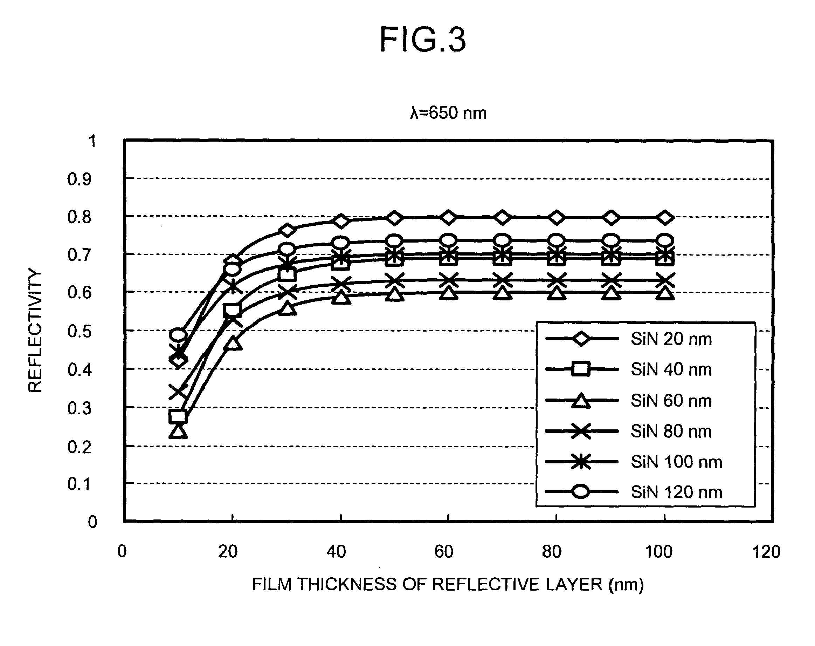

Fig. 3 is a graph of a relation between the thickness of the dielectric layer 10a, the thickness of the reflective layer 102, and the reflectivity in the optical recording medium shown in Fig. 2. In Fig. 3, the refractive index of the dielectric layer 10a is 2.3, and the thickness of the reflective layer 102 and that of the dielectric layer 10a are changed to indicate the reflectivity according to the change.

It can be seen from Fig. 3 that when the thickness of the reflective layer 102 is 30 nm, preferably, 40 nm or more, the reflectivity hardly changes even if the thickness of the reflective layer 102 varies. Thus, a test medium is obtained that has stable reflectivity when the thickness of the reflective layer 102 is 30 nm, preferably, 40 nm or more, even if there is a variation in the thickness of the reflective layer 102.

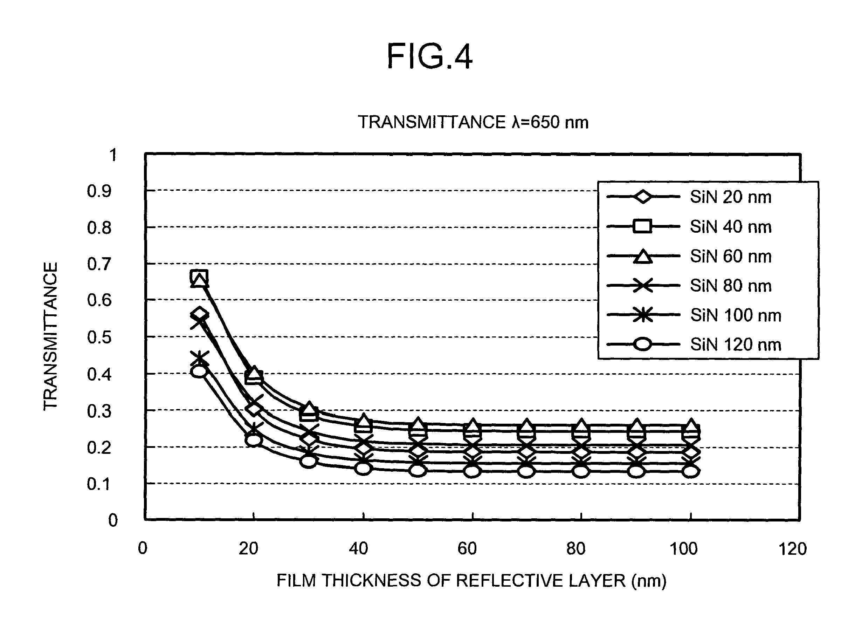

Fig. 4 is a graph of a relation between the thickness of the dielectric layer 10a, the thickness of the reflective layer 102, and the transmittance in the optical recording medium shown in Fig. 2. As can be seen in Fig. 4, the transmittance can be kept stable at 30% or less by the reflective layer 102 with a thickness of 30 nm, preferably, 40 nm or more.

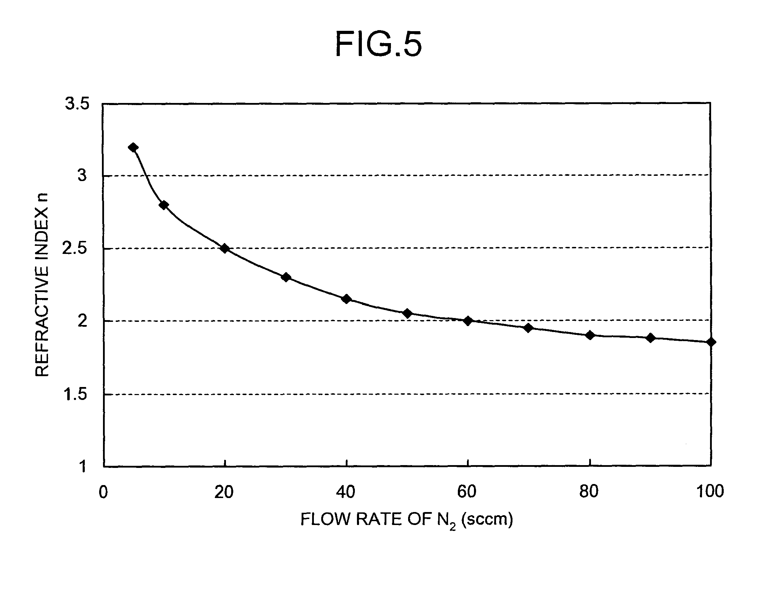

A method of adjusting the refractive index of the dielectric layer 10a of the optical recording medium shown in Fig. 2 is explained next with reference to Fig. 5. Fig. 5 is a graph of a relation between the flow rate of nitrogen (N₂) gas used when the dielectric layer 10a shown in Fig. 2 is formed and the refractive index of the silicon nitride (SiN) layer (dielectric layer 10a).

The flow rate of nitrogen (N₂) gas shown in Fig. 5 refers to the flow rate of nitrogen (N₂) gas mixed with Argon (Ar) gas that is introduced into the vacuum chamber in which the substrate 101 having the phase pits has been placed. As can be seen in Fig. 5, as the flow rate of nitrogen (N₂) gas increases, the refractive index tends to decrease. For example, if the flow rate of nitrogen (N₂) gas is 20 sccm, the silicon nitride (SiN) layer (dielectric layer 10a) having a refractive index of 2.5 can be obtained.

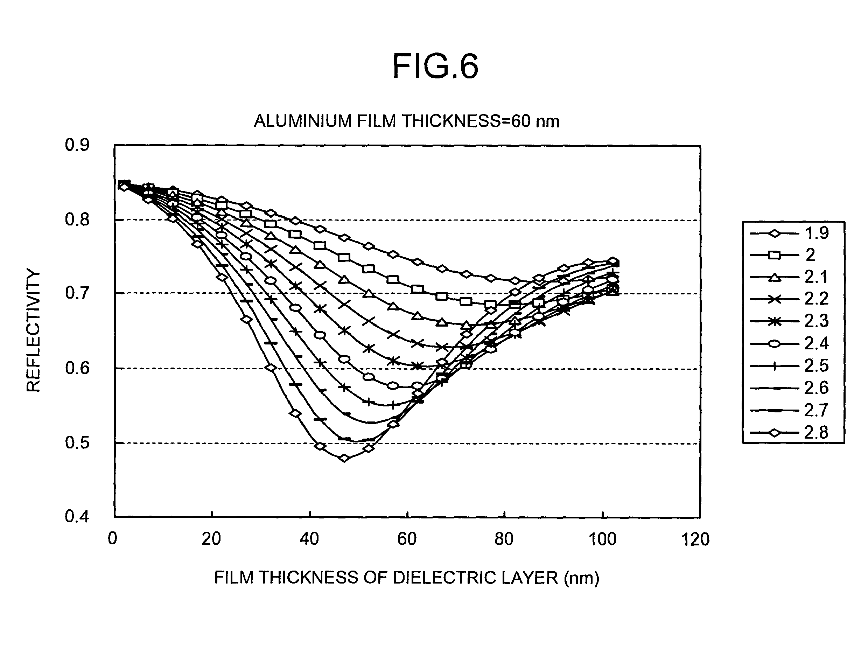

Fig. 6 is a graph of a relation between the refractive index of the dielectric layer 10a, the thickness of the dielectric layer 10a, and the reflectivity in the optical recording medium shown in Fig. 2. The reflectivity shown in Fig. 6 is the one when the reflective layer 102 of aluminum (Al) of Fig. 2 has a thickness of 60 nm.

As can be seen in Fig. 6, it is possible to select a refractive index which produces the least variation in the reflectivity in response to the variation in the thickness of the dielectric layer 10a (silicon nitride layer).

For example, if a refractive index is 2.3 and the thickness of the dielectric layer 10a is 70 nm, a reflectivity of 60% is obtained. Besides, the same reflectivity, 60%, can be obtained with a refractive index of 2.8 and the dielectric layer 10a having a thickness of 35 nm. However, the stability of the test medium is lost because the reflectivity fluctuates significantly according to variation in the thickness of the dielectric layer 10a. Therefore, stable reflectivity in the range of 60% to 70% can be obtained by selecting a refractive index that produces the least variation in the reflectivity in response to the variation in the thickness of the dielectric layer 10a.

The following procedure can be used to set reflectivity in the range of 70% to 80%. For example, a refractive index of 2 is selected, and the thickness of the dielectric layer 10a is changed in the range of 70 nm to 30 nm. Besides, it is possible to set the same reflectivity, in the range of 70% to 80%, by a refractive index of 2.8 and the dielectric layer 10a with a thickness of 35 nm or less. However, the stability of the test medium is lost because the reflectivity fluctuates significantly according to variation in the thickness of the dielectric layer 10a.

In the embodiment described above, the optical recording medium as a test medium performs reproduction in a wavelength range of 650 nm to 830 nm, i.e., wavelengths for CD-R or a DVD-R. In the following, another embodiment of the present invention is explained in which the optical recording medium as a test medium performs reproduction at a wavelength of 405 nm, i.e., wavelength for Blu-ray disk. In the embodiment, the reflectivity reducing layer 10 is a metal layer.

A structure of the optical recording medium whose reflectivity reducing layer 10 is a metal layer of molybdenum (Mo) is explained first with reference to Fig. 7. Fig. 7 is a side view of the optical recording medium having a metal layer as the reflectivity reducing layer 10. The optical recording medium includes a substrate 201 with phase pits, a metal layer 10b of molybdenum (Mo) on the substrate 201, a reflective layer 202 of a silver (Ag) film on the metal layer 10b, and a film 203 of protective resin coating formed on the reflective layer 202. The metal layer 10b can be composed of any material having a refractive index higher than the metal forming the reflective layer 202.

A conventional optical recording medium (which does not have a reflectivity reducing layer) is explained next with reference to Figs. 13 to 15 to clarify the feature of the optical recording medium shown in Fig. 7. Fig. 13 is a side view of the conventional optical recording medium having the reflective layer 202 of silver (Ag). Silver (Ag) is used instead of aluminum (Al) for the reflective layer 202 of a Blu-ray Disk that uses a short wavelength to ensure the flatness of the recording surface.

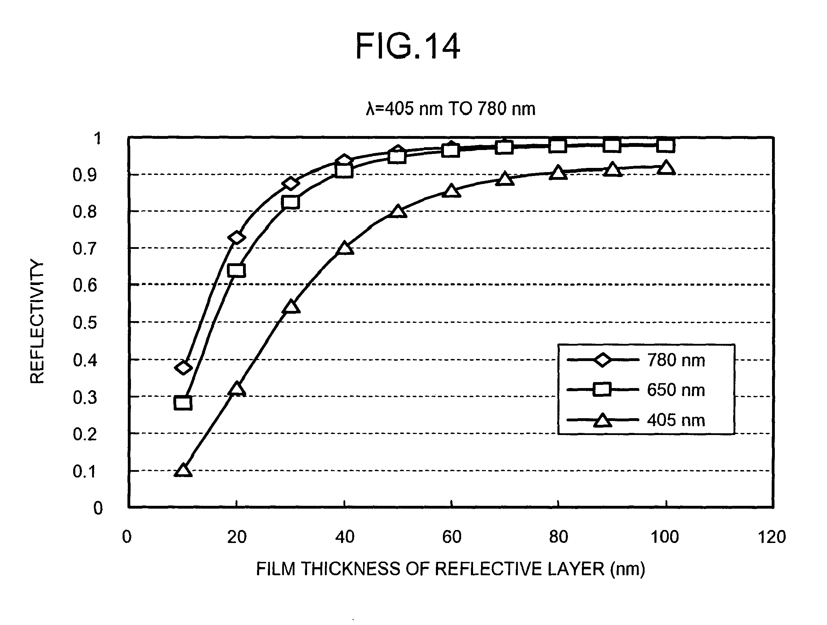

It is necessary to change the thickness of the reflective layer 202 so that the optical recording medium of Fig. 13 can reproduce the variation in the reflectivity of Blu-ray Disk. Fig. 14 is a graph of a relation between the thickness of the reflective layer 202 and the reflectivity in the optical recording medium shown in Fig. 13. In Fig. 14, the line joining the points represented by triangles denotes the variation in the reflectivity of the Blu-ray Disk. The lines denoting variations in the reflectivity for the wavelengths used by CD-R and DVD-R are also shown in Fig. 14 for comparison.

It is preferable to set the reflectivity between 60% and 80% to reproduce the variation in the reflectivity of Blu-ray disk. As shown in Fig. 14, if the thickness of the reflective layer 202 is set between 35 nm and 50 nm, the reflectivity can be set between 60% and 80%. As can be seen in Fig. 14, in the thickness range of 35 nm to 50 nm, the variation in the reflectivity for a wavelength of 405 nm is moderate compared to a wavelength of 650 nm or 780 nm.

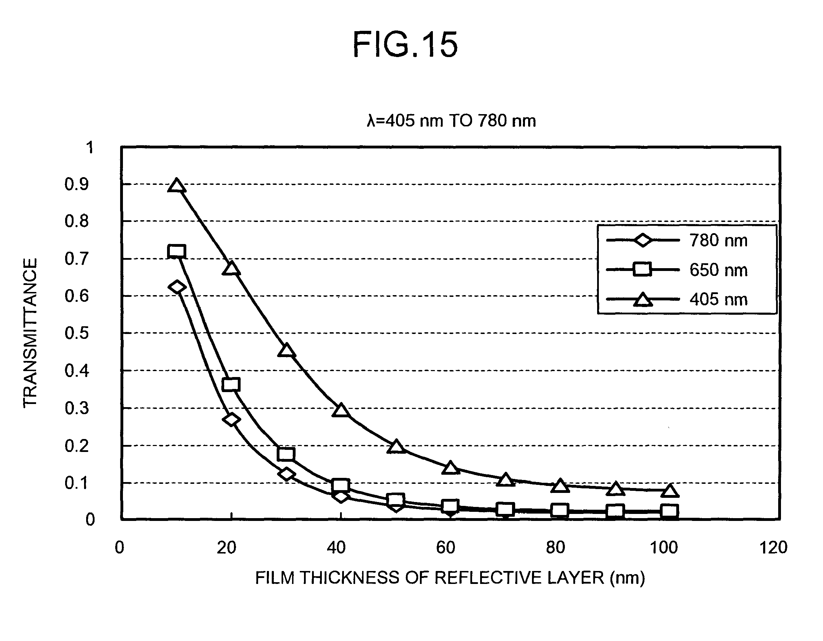

Fig. 15 is a graph of a relation between the thickness of the reflective layer 202 and the transmittance in the optical recording medium shown in Fig. 13. As can be seen in Fig. 15, in the thickness range of 35 nm to 50 nm, the transmittance for the wavelength 405 is higher than that of the wavelengths 650 and 780.

On the other hand, in the optical recording medium that includes the metal layer 10b shown in Fig. 7, the reflectivity can be stably set to any value without increasing the transmittance of the optical recording medium. The optical recording medium shown in Fig. 7 is described next in further detail.

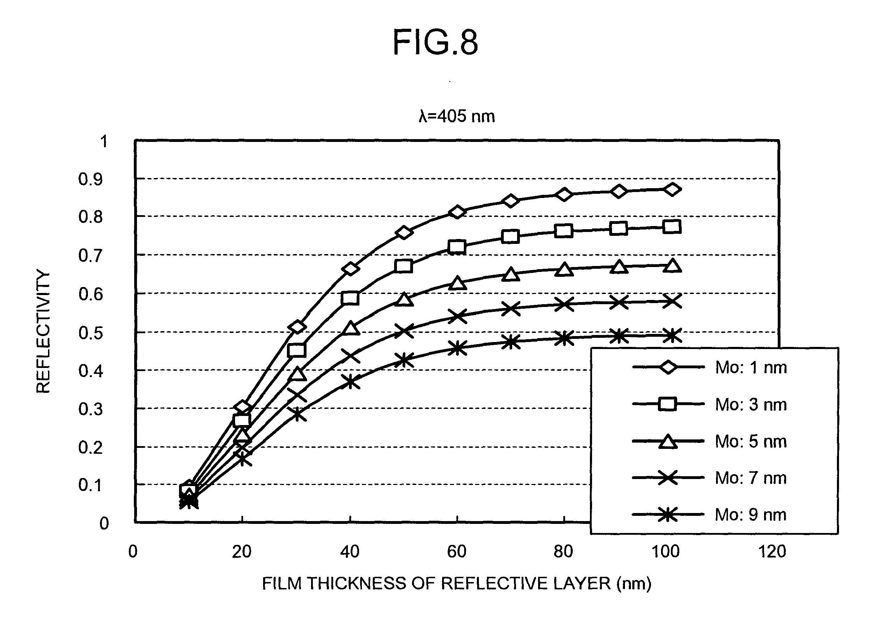

Fig. 8 is a graph of a relation between the thickness of the metal layer 10b, the thickness of the reflective layer 202, and the reflectivity in the optical recording medium shown in Fig. 7. In Fig. 7, the wavelength is 405, and the thickness of the reflective layer 202 and that of the metal layer 10b are changed to indicate the reflectivity according to the change.

It can be seen from Fig. 8 that when the thickness of the reflective layer 202 is 60 nm or more, the reflectivity hardly changes even if in the thickness of the reflective layer 202 varies. Thus, a test medium is obtained that has a stable reflectivity when the thickness of the reflective layer 202 is 60 nm or more, even if there is a variation in the thickness of the reflective layer 202.

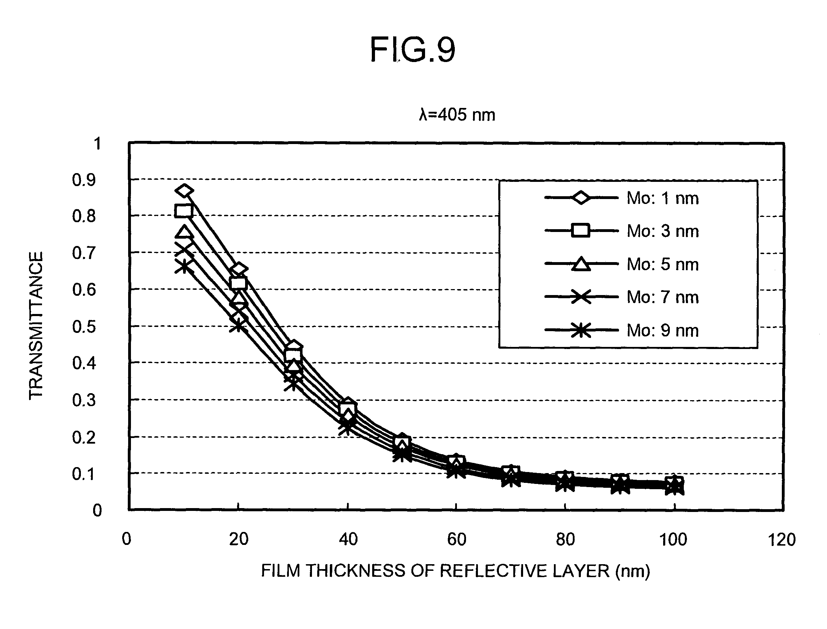

Fig. 9 is a graph of a relation between the thickness of the metal layer 10b, the thickness of the reflective layer 202, and the transmittance in the optical recording medium shown in Fig. 7. As can be seen in Fig. 9, the transmittance can be kept stable at 15% or less by the reflective layer 202 with a thickness of 60 nm or more.

That is, as shown in Figs. 8 9, by adjusting the thickness of the reflective layer 202 to 60 nm or more and the thickness of the metal layer 10b in the range of 35 nm to 50 nm, a test medium with a stable reflectivity can be obtained in which the transmittance is kept from increasing.

A fabrication method of phase pits formed in the substrate (see Fig. 1, 2, and 7) is explained next with reference to Figs. 6 and 7. The phase pits are formed by an exposure process involving irradiating a resist substrate with a laser beam. The substrate with the phase pits formed thereon is called a stamper. The stamper is mounted on a molding machine to mass-produce optical recording media having pits of the same shape.

If the distortion of the reproduction waveform due to variations in the recording conditions of the optical recording medium can be reproduced by adjusting the shape of the phase pits in the exposure process, the optical recording medium produced using the stamper can be used as a test medium.

In other words, by using the optical recording medium in which the distortion of the reproduction waveform due to variations in record mark shape as a result of variations in the recording conditions is reproduced by adjusting the phase pits thereof, the degree of distortion of the reproduction waveform can be made constant. Thus, a stable testing with good reproduction performance can be achieved.

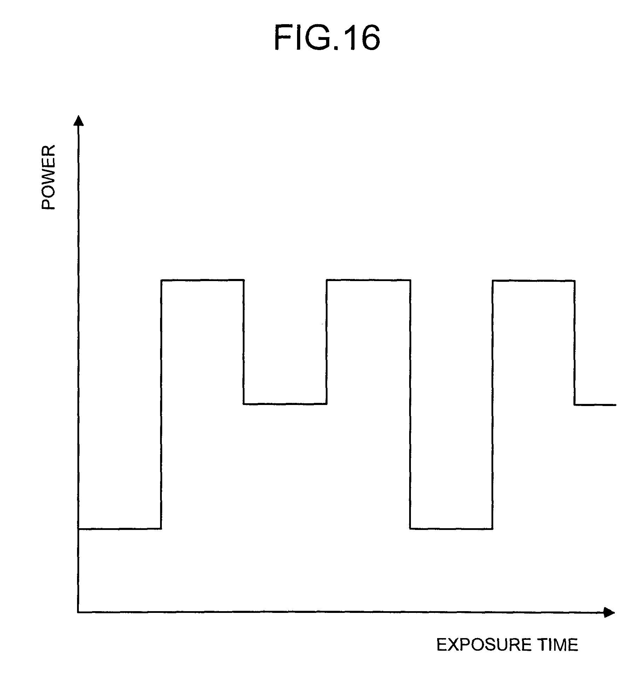

According to the present embodiment, variation in the reproduction waveform in the optical recording medium is reproduced by changing the time and power for the exposure waveform profile. Fig. 16 is a graph of a relation between a power of the light source and exposure time during the exposure process of the stamper fabrication. As can be seen in Fig. 16, distortion in the reproduction waveform as a result of variations in the recording conditions of the optical recording medium can be reproduced by changing the exposure time and the power.

In actuality, it is common that a plurality of factors for recording-related variations (distortion of reproduction waveform, noise, etc.) occur at the same time and it is rare that recording-related variations occurs due to a single factor. Therefore, testing is not accurate if the optical recording medium is subject to separate testing for each factor leading to recording condition variation.

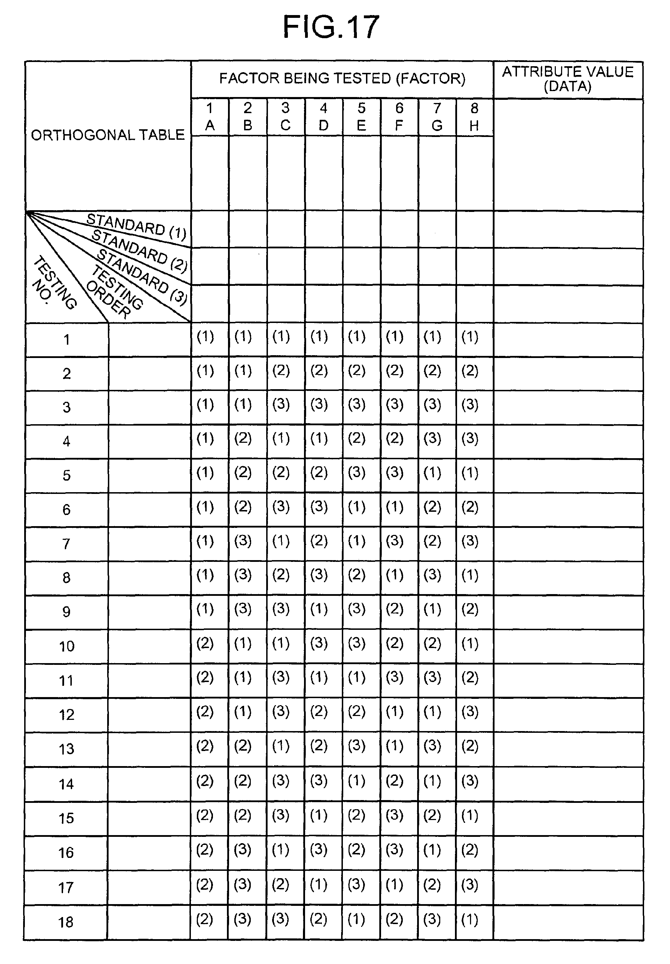

Therefore, in the present embodiment, an orthogonal table shown in Fig. 17 is used to set a plurality of factors for the recording-related variations to reproduce the variation encountered by the optical recording medium in actuality. Fig. 17 is an example of the orthogonal table. The orthogonal table contains rows in which various standards are set for, for example, the power of the light source and the exposure time, reflectivity, and substrate warp, thickness, and decentering. The contribution of each factor producing the recording-related variations can be determined by analyzing distortion tendency of the reproduction waveform of the test medium listed in columns. This analysis data can be used as a guideline for designing a reproducer of the optical recording medium with an improved reproduction quality.

As described above, in an optical recording medium according to the embodiment of the present invention that includes a reflective layer that reflects a light beam emitted to a substrate with phase pits thereon and the phase pits, a reflectivity reducing layer that reduces the reflectivity of the reflective layer is provided on a light-incident side of the reflective layer. Besides, a dielectric layer is formed as the reflectivity reducing layer where a refractive index is varied. Or, a metal layer is formed as the reflectivity reducing layer with a metal film which has a higher refractive index than the metal used for the reflective layer. The optical recording medium thus fabricated allows the reflectivity to be set to any value without increasing the transmittance.

As set forth hereinabove, according to embodiments of the present invention, an optical recording medium includes a reflectivity reducing layer that reduces the reflectivity of a reflective layer on a light-incident side of the reflective layer. The optical recording medium is fabricated such that the reflectivity of the entire optical recording medium is 60% to 80%, excluding an effect of light scattering by phase bits.

Moreover, a dielectric layer is used as the reflectivity reducing layer, and the reflective layer is an aluminum (Al) film mainly containing aluminum, while the dielectric layer is a silicon nitride (SiN) film mainly containing silicon nitride. The reflectivity of the entire optical recording medium can be adjusted by changing the thickness or refractive index of the silicon nitride film. The reflectivity of the entire optical recording medium can also be adjusted by selecting the refractive index of the silicon nitride film such that the reflectivity is a minimum when the film thickness of the silicon nitride film varies.

As the reflectivity reducing layer, a metal layer can also be used which has the refractive index higher than that of the reflective layer. In this case, the reflective layer is a silver (Ag) film mainly containing silver, while the metal layer is a molybdenum (Mo) film mainly containing molybdenum.

Thereby, the reflectivity can be set to any value without increasing a transmission coefficient as well as without having to strictly control the film thickness. In addition, it is possible to realize a test medium with desired reflectivity.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An optical recording medium comprising:
a substrate that includes phase pits;
a reflective layer that reflects a light beam emitted to the substrate and the phase pits; and
a reflectivity reducing layer that reduces reflectivity of the reflective layer, the reflectivity reducing layer being provided on a light-incident side of the reflective layer.

2. The optical recording medium according to claim 1, wherein reflectivity of the entire optical recording medium is 60% to 80%, excluding an effect of light scattering caused by the phase pits.

3. The optical recording medium according to claim 1, wherein the reflectivity reducing layer is a dielectric layer.

4. The optical recording medium according to claim 3, wherein
the reflective layer is an aluminum film containing substantial portion of aluminum, and
the dielectric layer is a silicon nitride film containing substantial portion of silicon nitride.

5. The optical recording medium according to claim 4, wherein reflectivity of the entire optical recording medium is adjusted by changing a thickness of the silicon nitride film.

6. The optical recording medium according to claim 4, wherein reflectivity of the entire optical recording medium is adjusted by changing a refractive index of the silicon nitride film.

7. The optical recording medium according to claim 6, wherein the reflectivity of the entire optical recording medium is adjusted by selecting a refractive index of the silicon nitride film such that the reflectivity of the entire optical recording medium is a minimum when the thickness of the silicon nitride film is varied.

8. The optical recording medium according to claim 7, wherein the thickness of the silicon nitride film is 50 nm to 90 nm.

9. The optical recording medium according to claim 7, wherein the reflectivity of the entire optical recording medium is 60% to 70%.

10. The optical recording medium according to claim 6, wherein
the refractive index of the silicon nitride film is 1.9 to 2.1, and
the thickness of the silicon nitride film is 20 nm to 80 nm.

11. The optical recording medium according to claim 10, wherein the reflectivity of the entire optical recording medium is 70% to 80%.

12. The optical recording medium according to claim 6, wherein the refractive index of the silicon nitride film is adjusted by changing a flow rate of nitrogen during film-forming by sputtering.

13. The optical recording medium according to claim 4, wherein
a thickness of the aluminum film is equal to or more than 30 nm, and
a sum of the thickness of the aluminum film and a thickness of the silicon nitride film is equal to or less than 200 nm.

14. The optical recording medium according to claim 1, wherein the reflectivity reducing layer is a metal layer with a refractive index higher than that of the reflective layer.

15. The optical recording medium according to claim 14, wherein
the reflective layer is a silver film containing substantial portion of silver, and
the metal layer is a molybdenum film containing substantial portion of molybdenum.

16. The optical recording medium according to claim 15, wherein a thickness of the molybdenum film is 3 nm to 9 nm.

17. The optical recording medium according to claim 15, wherein
a thickness of the silver film is equal to or more than 60 nm, and
a sum of the thickness of the silver film and a thickness of the molybdenum layer is equal to or less than 200 nm.

18. The optical recording medium according to claim 1, wherein the phase pits are adjusted such that distortion of reproduction waveform and noise are reproduced by changing a power of a light source and an exposure time in an exposure process in stamper fabrication.

19. The optical recording medium according to claim 18, wherein the power of the light source, the exposure time, and reflectivity of the entire optical recording medium are set according to an orthogonal table.

20. The optical recording medium according to claim 19, wherein at least one of a substrate warp, a substrate thickness, and decentering is set according to the orthogonal table.

21. A fabrication method of an optical recording medium comprising:
forming a substrate that includes phase pits;
forming a reflective layer that reflects a light beam emitted to the substrate and the phase pits; and
forming a reflectivity reducing layer that reduces reflectivity of the reflective layer on a light-incident side of the reflective layer.
